# EUROPEAN PATENT SPECIFICATION

(11) **EP 0 361 932 B1**
(45) Date of publication and mention of the grant of the patent: **12.06.1996**
(21) Application number: 89309913.5
(22) Date of filing: 28.09.1989
(51) Int. Cl.: G01B 7/02, G01B 7/34, G11B 11/08

(54) **Scanning tunnel-current-detecting device and method**
Verfahren und Detektor-Vorrichtung zum Abtasten durch Tunnelstrom
Méthode et dispositif de détection à balayage par courant à effet tunnel

(30) Priority: 30.09.1988 JP 244590/88; 25.09.1989 JP 246427/89
(43) Date of publication of application: 04.04.1990
(73) Proprietor: CANON KABUSHIKI KAISHA, Tokyo (JP)
(72) Inventor: Yanagisawa, Yoshihiro, Atsugi-shi Kanagawa-ken (JP); Sakai, Kunihiro, Isehara-shi Kanagawa-ken (JP); Kawade, Hisaaki, Atsugi-shi Kanagawa-ken (JP)
(74) Representative: Beresford, Keith Denis Lewis

(56) References cited:
- EP-A- 0 262 253
- EP-A- 0 272 935
- WO-A-88/04028
- DE-C- 3 513 799
- PATENT ABSTRACTS OF JAPAN vol. 12, no. 401 (P-776)(3248), 25 october1988; & JP-A-63142202 ( FUJITSU LTD.) 14.06.1988.
- PATENT ABSTRACTS OF JAPAN vol. 13, no. 32 (P- 817)(3380), 25 January 1989; & JP-A-63231202 (HITACHI LTD.) 27.09.1988 27.09.1988.
- PATENT ABSTRACTS OF JAPAN vol. 13, no. 316 (P-900)(3664), 18 July 1989; & JP-A-186002 (FUJITSU LTD.) 30.03.1989; & JP-A-186002 (FUJITSU LTD.) 30.03.1989.

## Description

### BACKGROUND OF THE INVENTION

### Field of the Invention

The present invention relates to a scanning tunnel-current-detecting device and a method for detecting a tunnel current and to a scanning tunnelling microscope and a recording/reproducing device utilizing a method for detecting tunnel current.

### Related Background Art

Recently a scanning tunnelling microscope (hereinafter referred to as STM) has been deveioped [G. Binnig et al., Helvetica Physica Acta, 55 , 726 (1982)] which enables direct observation of electronic structure of the atoms on the surface of a conductor, and allows the measurement of an image of real space of not only a single crystal sample but also an amorphous material sample with high resolution. This measurement has the advantage that an observation can be made with low electric power without impairing the sample by a current. Moreover, this measurement can be conducted in an atmospheric environment and is applicable to various materials, so that the method is promising in a variety of technical applications.

The STM utilizes a tunnel current which flows between a metallic probe (or a probe electrode) and an electroconductive material (or a sample) when an electric voltage is applied therebetween and both are brought into proximity as close as approximately 1 nm to each other. This current is extremely sensitive to the change in the distance between the probe electrode and the sample, so that the scanning with a probe at a constant tunnel current allows depiction of the surface structure of the real space and simultaneously gives various information regarding the whole electronic clouds of surface atoms.

For the STM to be effective, any external disturbances caused by floor vibration, and minute deformations caused by ambient temperature variation should be reduced to less than the resolution limit of the STM.

Generally, for eliminating the influence of vibration, passive measures are taken such as reducing vibration by means of the damper element of a dynamic vibration isolator, or by lowering the resonant frequency by means of a relatively massive body constituting the support or stand of the STM.

With these arrangements the vibration problem can be reduced to an acceptable level in the case where it is desired to observe the local atomic arrangement of a sample by locally scanning with a probe electrode of the STM. However, where it is desired to observe the surface state of a sample over a relatively large area by scanning with a probe electrode of the STM for a long time, there arises a problem of temperature drift caused by the relative thermal contraction or expansion of the STM and the sample to be measured. This can become significant and thus lower the accuracy of the measurement. The variation caused by this temperature drift may sometimes reach approximately 0.5 µm (in the Z direction).

It is known from JP-A-63142202 (Fujitsu) Limited) to have an arrangement in which a high frequency voltage is applied between a probe and a specimen and the distance between the probe and the specimen adjusted in order to keep the change ratio of the magnitude of the current generated constant. However, in this arrangement there is only a single probe which has to act both as a sensor and the means by which a tunnel current flows between the probe and the specimen.

### SUMMARY OF THE INVENTION

The present invention provides a tunnel current detecting device as claimed in claim 1. It also provides an automatic correcting method as claimed in claim 4.

There is disclosed in EP-A-0272935 a recording and reproducing device comprising a probe electrode, a recording medium having electric memory effect and a writing voltage applying means for applying voltage onto the recording medium from said probe electrode, and a reproducing device comprising a probe electrode, a recording medium exhibiting electric memory effect or a recording medium recorded by energy irradiation, a voltage applying means for applying voltage not exceeding the threshold value voltage giving rise to electric memory effect onto the recording medium from said probe electrode and a reading means for reading the change in current quantity passing through said recording medium.

How the invention may be carried out will now be described by way of example only and with reference to the accompanying drawings in which:

### BRIEF DESCRIPTION OF THE DRAWINGS

Fig 1 illustrates a block diagram of one embodiment of the invention of an STM provided with a mechanism for compensating variations caused by thermal drifts and mechanical vibrations.

Fig. 2 is a perspective view of a second embodiment of the invention of an STM.

### DETAILED DESCRIPTION OF THE PREFERRED EMBODIMENTS

The present invention relates to a scanning tunnel-current-detecting device comprising a second probe electrode (a position-controlling tip) provided separately from a first probe electrode for observation, and a variation-compensating mechanism constituted by a feedback servo circuit which detects relative movement between the STM and the sample to be measured caused by a temperature drift. This is achieved by detecting the consequent change of a tunnel current flowing between the second probe electrode and the sample, and generating a detection signal which controls a fine variation-compensating device.

The Examples below describe the constitution of the present invention in detail.

### Example 1

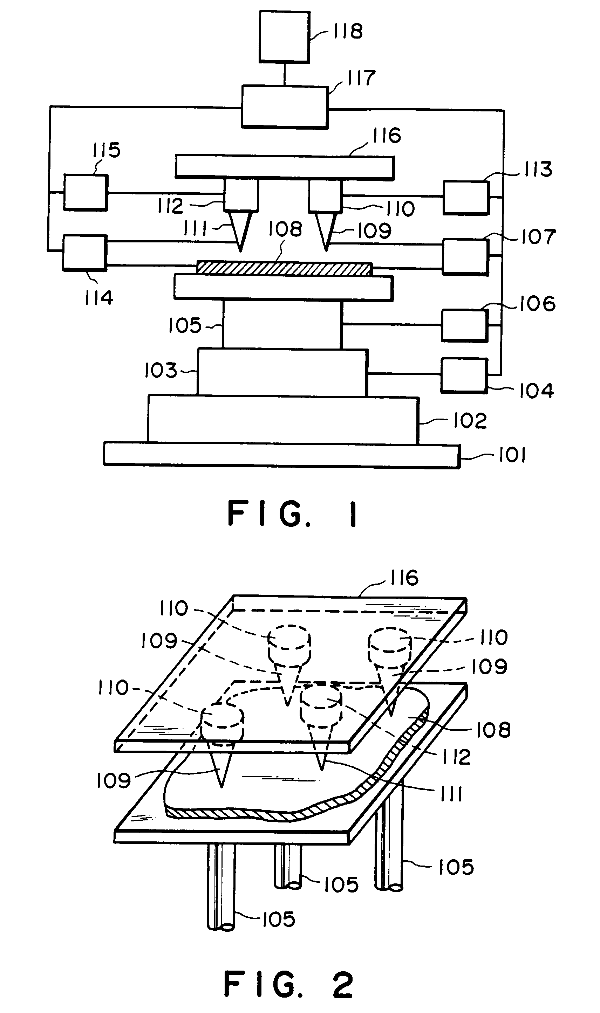

Fig. 1 shows a block diagram of an STM comprising a variation compensating mechanism of a preferred embodiment of the present invention.

The whole device is mounted on vibration-damping member 101 having a relatively large mass so that any vibration of high frequency from an external disturbance can be intercepted.

The relative positions of a position-controlling tip 109 and an observation tip 111 to an electroconductive sample 108 can be chosen as desired by means of an XY stage 102 within the (XY) plane and a coarse adjusting mechanism 103 within a height direction (Z). The numeral 104 denotes a driving circuit for driving the coarse adjusting mechanism 103. Observation tip 111 is capable of scanning within the (XY) plane with a constant tunnel current maintained by cylindrical observation piezo-element 112, where the positional variation of cylindrical observation piezo-element 112 in the Z direction corresponds to the surface state of electroconductive sample 108. Current amplifier 114 amplifies the tunnel current flowing between observation tip 111 and electroconductive sample 108. Servo circuit 115 serves to drive cylindrical observation piezo-element 112 in the Z direction so as to keep the tunnel current constant when observation tip 111 scans.

Cylindrical observation piezo-element 112 for driving observation tip 111 is integrated through piezo-element supporting member 116 with position-controlling piezo-element 110 for driving position-controlling tip 109 as shown in Fig. 1.

While the surface is observed by scanning the surface of the electroconductive sample 108 with observation tip 111, the tunnel current is measured at a specified position of the electroconductive sample 108 by position-controlling tip 109.

This tunnel current will vary on receiving an external disturbance such as a vibration. Accordingly, variations caused by thermal drifts, vibrations, etc. can be cancelled mechanically by driving the fine variation-compensating mechanism 105 in the Z direction through position-controlling servo circuit 106. The sample 108 is thus moved in relation to the probes.

Other correction methods are feasible. For example, the variation read by the position-controlling tip 109 can be subtracted from the observed value read by the observation tip 111 on the basis of data analysis carried out by the microcomputer 117.

These correction methods enable observation to be made without the influence of any minute deformation of the structure of the STM caused by an external vibration or an environmental change when observation tip 111 scans the sample.

Incidentally, position-controlling piezo element 110 is employed for setting preliminarily the suitable tunnel current value for controlling thermal drifts, etc. by deciding the position of position-controlling tip 109 in the Z direction before beginning the surface observation, and the preliminarily set driving voltage is kept constant during the observation.

The numeral 113 is a circuit for driving position-controlling piezo element 110, and the numeral 107 is a current amplifier for amplifying a tunnel current flowing between tip 109 and sample 108.

The devices described above are respectively controlled by central microcomputer 117. And the numeral 118 denotes a display instrument.

The tunnel current at a specified position was measured by observation tip 111, ten times with the feedback system of the present invention employed against thermal drift and vibration, etc.; and ten times without employing the above feedback system for comparison. The operation of the feedback system was found to reduce the variation caused by the temperature drift to 1/100 or less of the case without employing the feedback system, by which the effect of the present invention was confirmed.

### Example 2

Another example is as shown in Fig. 2, which uses a position-controlling tip 109 and three sets of fine variation-compensating mechanisms 105 for leveling the sample surface before its observation and for maintaining that leveling during observation.

A graphite surface was observed with this device to obtain satisfactory data.

### Example 3

The device of the present invention as used for a recording/reproducing apparatus is described below.

The constitution of the recording/reproducing apparatus is basically similar to the block diagram shown in Fig. 1. A recording medium, having provided with a recording layer partially on the graphite, was used as sample 108. The recording medium was so fabricated that the recording layer was positioned under probe electrode 111 and the surface of graphite was positioned under probe 109.

An LB layer (one layer) of squarilium-bis-6-octylazulene was used as a recording layer. The LB layer was made according to a method of JP Laid-Open No. 63-161,552.

Recording/reproducing was carried out as follows: The probe voltage of 1.0 V was applied between probe electrode 109 and the graphite, and the distance (Z) between probe electrode 109 and the graphite surface was so adjusted that the probe current (Ip) at a specified position was made 10⁻⁹ A by means of fine variation-compensating mechanism 105.

Then, (+) was applied on probe electrode 111, (-) was applied on the graphite, and a rectangular pulse voltage more than threshold voltage V_{th·ON} to change a recording layer to a low resistance conditions (ON conditions) was applied to cause the ON conditions. Keeping the distance (Z) between probe electrode 111 and the graphite, a probe voltage 1.0 V was applied between probe electrode 111 and the graphite, and probe current (Ip) was measured. It was confirmed to be the ON conditions by detecting a current of about 0.5 mA.

Upon setting the probe voltage of 10 V, which was more than threshold voltage V_{th·OFF}, to change a recording layer from the ON to the OFF conditions and applying it again at the recording position, the recording conditions were erased and it was confirmed to be transferred to the OFF conditions.

In carrying out the recording/reproducing, variations caused by thermal drifts, vibrations, etc. could be cancelled by driving the fine variation-compensating mechanism 105 by means of position-controlling servo circuit 106 to keep the tunnel current constant, by measuring the tunnel current flowing between probe electrode 109 and the graphite surface.

An STM provided with a mechanism, as described above, can remove variations caused by thermal drifts and mechanical vibrations so that observations are not adversely influenced by vibration of an angstrom order and by minute deformation of the structure of the STM caused by temperature change.

The device of the present invention may be used for a tunnelling current detecting device other than a tunnel microscope, such as a recording-reproducing apparatus and the like.

## Claims

1. A tunnel current-detecting device comprising two probe electrodes (111, 109) mounted on a support (116) and adapted in use to be in proximity to the surface of a sample (108) and means for effecting tunnel current flow between the probe electrodes (111, 109) and the sample (108);
the device being characterised in including:
means for monitoring the tunnel current flowing between the probe electrodes and the sample (108), and a feedback system for compensating for any deviation in the distance between the first of the probe electrodes (111) and the surface of the sample (108) including means for adjusting the distance between the sample (108) and the support (116) so as to keep substantially constant the tunnel current flowing between the second of the probe electrodes (109) and the surface of said sample (108).

2. A device as claimed in claim 1 which is a recording/reproducing device wherein said sample (108) has a recording layer on its surface.

3. An automatic correction method comprising the steps of:
mounting two probe electrodes (111, 109) on a support (116) in proximity to the surface of a sample (108); and
effecting tunnel current flow between the probeS (111, 109) and the sample (108);
the method being characterised in including the step of:
compensating for any deviation of the distance between the first of said probe electrodes (111) and the surface of said sample (108) by adjusting the distance between said sample surface and said support (116) while monitoring the tunnel current flowing between the second of the probe electrodes (109) and the sample (108) so as to keep substantially constant the current flowing between said second probe electrode (109) and said sample (108).

4. A method for recording information on a recording medium comprising the method steps of claim 3, wherein said surface is a recording medium, said method further comprises the steps of:
recording information on said recording medium by means of said first probe electrode (111), while compensating for a deviation of the distance between said first probe electrode (111) and said recording medium by a fine variation compensating mechanism (105) so as to keep substantially constant a tunnel current flowing between said second probe electrode (109) and said recording medium.

5. A method of reproducing information on a recording medium comprising the method steps of claim 3, wherein said surface is a recording medium, and further comprising the steps of reproducing said information from said recording medium by means of said first probe electrode (111), while compensating for any deviation of the distance between said first probe electrode (111) and said recording medium by adjusting the distance between said recording medium and said supporting member (116) so as to keep substantially constant a tunnel current flowing between said second probe electrode and said recording medium.

6. A method for erasing recorded information on a recording medium comprising the method steps of claim 3, wherein said surface is a recording medium and further comprising the steps of erasing said recorded information by means of said first probe electrode (111), while compensating for any deviation of the distance between said first probe electrode (111) and said recording medium by adjusting the distance between said recording medium and said supporting member (116) so as to keep substantially constant a tunnel current flowing between said second probe electrode (109) and said recording medium.

7. A method as claimed in any one of claims 3 to 6, wherein said first probe electrode (111) is connected with said support (116) through driving means (112) for driving said first probe electrode (111).

8. A method as claimed in any one of claims 3 to 7, wherein said second probe electrode (109) is kept at a specified position above said sample surface.

9. A method as claimed in any one of claims 4 to 6, wherein said recording medium has a recording layer on the surface.

10. A method as claimed in any of claims 5 to 7, wherein said recording is carried out by applying to said recording medium using said first probe electrode (111) a pulse voltage exceeding a threshold voltage for changing an electric resistance of said recording medium.

11. A method as claimed in claim 6, wherein said reproducing is carried out by detecting a tunnel current flowing between said first probe electrode (111) and said recording medium.

12. A device as claimed in claims 1 in which the device is a recording/reproducing device.

13. A device as claimed in claim 1 in which the device is a reproducing device.

14. A device as claimed in claim 1 or 2, in which the device is a recording/reproducing/erasing device.

15. A device as claimed in claim 1 in which the device is a scanning tunnelling microscope.

## Patentansprüche

1. Tunnelstrom-Erfassungsvorrichtung mit
zwei Meßelektroden (111, 109), die an einem Trägerelement (116) angebracht und bei Gebrauch in die Nähe der Oberfläche einer Probe (108) bringbar sind und
einer Einrichtung zur Erzeugung eines Tunnelstromflusses zwischen den Meßelektroden (111, 109) und der Probe (108),
**dadurch gekennzeichnet, daß**
die Vorrichtung
eine Einrichtung zur Überwachung des zwischen den Meßelektroden und der Probe (108) fließenden Tunnelstroms und
ein Rückkopplungssystem zur Kompensierung jeder Abweichung des Abstands zwischen der ersten Meßelektrode (111) und der Oberfläche der Probe (108) aufweist, das eine Einrichtung zur Einstellung des Abstands zwischen der Probe (108) und dem Trägerelement (116) enthält, um den zwischen der zweiten Meßelektrode (109) und der Oberfläche der Probe (108) fließenden Tunnelstrom im wesentlichen konstant zu halten.

2. Vorrichtung nach Anspruch 1, die eine Aufzeichnungs/Wiedergabevorrichtung ist, bei der die Probe (108) eine Aufzeichnungsschicht auf ihrer Oberfläche aufweist.

3. Automatisches Korrekturverfahren mit den Schritten
Anbringen zweier Meßelektroden (111, 109) an einem Trägerelement (116) in der Nähe der Oberfläche einer Probe (108) und
Erzeugen eines Tunnelstromflusses zwischen den Meßelektroden (111, 109) und der Probe (108),
**dadurch gekennzeichnet, daß**
das Verfahren den Schritt
Kompensieren jeder Abweichung des Abstands zwischen der ersten Meßelektrode (111) und der Oberfläche der Probe (108) durch Einstellen des Abstands zwischen der Probenoberfläche und dem Trägerelement (116) während der Überwachung des zwischen der zweiten Meßelektrode (109) und der Probe (108) fließenden Tunnelstroms, um den zwischen der zweiten Meßelektrode (109) und der Probe (108) fließenden Strom im wesentlichen konstant zu halten, umfaßt.

4. Verfahren zur Aufzeichnung von Information auf einen Aufzeichnungsträger mit den Verfahrensschritten nach Anspruch 3, dadurch gekennzeichnet, daß die Oberfläche ein Aufzeichnungsträger ist und das Verfahren den Schritt
Aufzeichnen von Information auf den Aufzeichnungsträger mittels der ersten Meßelektrode (111) während des Kompensierens einer Abweichung des Abstands zwischen der ersten Meßelektrode (111) und dem Aufzeichnungsträger durch eine Feinveränderungs-Kompensierungseinrichtung (105), um den zwischen der zweiten Meßelektrode (109) und dem Aufzeichnungsträger fließenden Tunnelstrom im wesentlichen konstant zu halten, umfaßt.

5. Verfahren zur Wiedergabe von auf einem Aufzeichnungsträger befindlicher Information mit den Verfahrensschritten nach Anspruch 3,
dadurch gekennzeichnet, daß die Oberfläche ein Aufzeichnungsträger ist und das Verfahren den Schritt
Wiedergeben der Information von dem Aufzeichnungsträger mittels der ersten Meßelektrode (111) während des Kompensierens jeder Abweichung des Abstands zwischen der ersten Meßelektrode (111) und dem Aufzeichnungsträger durch Einstellen des Abstands zwischen dem Aufzeichnungsträger und dem Trägerelement (116), um den zwischen der zweiten Meßelektrode und dem Aufzeichnungsträger fließenden Tunnelstrom im wesentlichen konstant zu halten, umfaßt.

6. Verfahren zum Löschen der aufgezeichneten Information auf einem Aufzeichnungsträger mit den Verfahrensschritten nach Anspruch 3,
dadurch gekennzeichnet, daß die Oberfläche ein Aufzeichnungsträger ist und das Verfahren den Schritt
Löschen der aufgezeichneten Information mittels der ersten Meßelektrode (111) während des Kompensierens jeder Abweichung des Abstands zwischen der ersten Meßelektrode (111) und dem Aufzeichnungsträger durch Einstellen des Abstands zwischen dem Aufzeichnungsträger und dem Trägerelement (116), um den zwischen der zweiten Meßelektrode (109) und dem Aufzeichnungsträger fließenden Tunnelstrom im wesentlichen konstant zu halten, umfaßt.

7. Verfahren nach einem der Ansprüche 3 bis 6,
dadurch gekennzeichnet, daß die erste Meßelektrode (111) mit dem Trägerelement (116) über eine Ansteuereinrichtung (112) zum Ansteuern der ersten Meßelektrode (111) verbunden ist.

8. Verfahren nach einem der Ansprüche 3 bis 7,
dadurch gekennzeichnet, daß die zweite Meßelektrode (109) an einer bestimmten Position über der Probenoberfläche gehalten wird.

9. Verfahren nach einem der Ansprüche 4 bis 6,
dadurch gekennzeichnet, daß der Aufzeichnungsträger eine Aufzeichnungsschicht auf der Oberfläche aufweist.

10. Verfahren nach einem der Ansprüche 5 bis 7,
dadurch gekennzeichnet, daß das Aufzeichnen durch über die erste Meßelektrode (111) erfolgendes Anlegen einer eine Schwellenspannung überschreitenden Impulsspannung an den Aufzeichnungsträger zum Verändern des elektrischen Widerstands des Aufzeichnungsträgers ausgeführt wird.

11. Verfahren nach Anspruch 6,
dadurch gekennzeichnet, daß die Wiedergabe durch Erfassung eines zwischen der ersten Meßelektrode (111) und dem Aufzeichnungsträger fließenden Tunnelstroms erfolgt.

12. Vorrichtung nach Anspruch 1,
dadurch gekennzeichnet, daß die Vorrichtung eine Aufzeichnungs-/Wiedergabevorrichtung ist.

13. Vorrichtung nach Anspruch 1,
dadurch gekennzeichnet, daß die Vorrichtung eine Wiedergabevorrichtung ist.

14. Vorrichtung nach Anspruch 1 oder 2,
dadurch gekennzeichnet, daß die Vorrichtung eine Aufzeichnungs-/Wiedergabe-/Löschvorrichtung ist.

15. Vorrichtung nach Anspruch 1,
dadurch gekennzeichnet, daß die Vorrichtung ein Abtast-Tunnelmikroskop ist.

## Revendications

1. Dispositif de détection de courant d'effet tunnel comprenant deux électrodes-sondes (111, 109) montées sur un support (116) et conçues pour être, lors de leur utilisation, à proximité de la surface d'un échantillon (108), et des moyens pour produire le passage d'un courant d'effet tunnel entre les électrodes-sondes (111, 109) et l'échantillon (108);
le dispositif étant caractérisé par le fait qu'il comporte :
des moyens pour contrôler le courant d'effet tunnel qui passe entre les électrodes-sondes et l'échantillon (108), et un système à rétroaction pour compenser un éventuel écart de distance entre la première des électrodes-sondes (111) et la surface de l'échantillon (108), comportant des moyens pour ajuster la distance entre l'échantillon (108) et le support (116) de façon à maintenir sensiblement constant le courant d'effet tunnel passant entre la seconde des électrodes-sondes (109) et la surface dudit échantillon (108).

2. Dispositif selon la revendication 1, qui est un dispositif d'enregistrement/reproduction dans lequel ledit échantillon (108) a une couche d'enregistrement sur sa surface.

3. Procédé de correction automatique comprenant les étapes qui consistent :
à monter deux électrodes-sondes (111, 109) sur un support (116) à proximité de la surface d'un échantillon (108); et
à produire le passage d'un courant d'effet tunnel entre les sondes (111, 109) et l'échantillon (108); le procédé étant caractérisé par le fait qu'il comporte l'étape qui consiste :
à compenser un éventuel écart de distance entre la première desdites électrodes-sondes (111) et la surface dudit échantillon (108) en ajustant la distance entre ladite surface d'échantillon et ledit support (116), tout en contrôlant le courant d'effet tunnel passant entre la seconde des électrodes-sondes (109) et l'échantillon (108) afin de maintenir sensiblement constant le courant passant entre ladite seconde électrode-sonde (109) et ledit échantillon (108).

4. Procédé pour enregistrer des informations sur un support d'enregistrement, comprenant les étapes du procédé de la revendication 3, dans lequel ladite surface est un support d'enregistrement, ledit procédé comprenant en outre les étapes qui consistent :
à enregistrer des informations sur ledit support d'enregistrement au moyen de ladite première électrode-sonde (111), tout en compensant un écart de distance entre ladite première électrode-sonde (111) et ledit support d'enregistrement au moyen d'un mécanisme (105) de compensation de variation fine de façon à maintenir sensiblement constant un courant d'effet tunnel passant entre ladite seconde électrode-sonde (109) et ledit support d'enregistrement.

5. Procédé de reproduction d'informations sur un support d'enregistrement, comprenant les étapes du procédé selon la revendication 3, dans lequel ladite surface est un support d'enregistrement, et comprenant en outre les étapes qui consistent à reproduire lesdites informations à partir dudit support d'enregistrement au moyen de ladite première électrode-sonde (111), tout en compensant un éventuel écart de distance entre ladite première électrode-sonde (111) et ledit support d'enregistrement en ajustant la distance entre ledit support d'enregistrement et ledit élément de support (116) de façon à maintenir sensiblement constant un courant d'effet tunnel passant entre ladite seconde électrode-sonde et ledit support d'enregistrement.

6. Procédé d'effacement d'informations enregistrées sur un support d'enregistrement, comprenant les étapes du procédé selon la revendication 3, dans lequel ladite surface est un support d'enregistrement, et comprenant en outre les étapes qui consistent à effacer lesdites informations enregistrées au moyen de ladite première électrode-sonde (111), tout en compensant un éventuel écart de distance entre ladite première électrode-sonde (111) et ledit support d'enregistrement en ajustant la distance entre ledit support d'enregistrement et ledit élément de support (116) de façon à maintenir sensiblement constant un courant d'effet tunnel passant entre ladite seconde électrode-sonde (109) et ledit support d'enregistrement.

7. Procédé selon l'une quelconque des revendications 3 à 6, dans lequel ladite première électrode-sonde (111) est connectée audit support (116) par l'intermédiaire de moyens (112) d'attaque pour attaquer ladite première électrode-sonde (111).

8. Procédé selon l'une quelconque des revendications 3 à 7, dans lequel ladite seconde électrode-sonde (109) est maintenue à une position spécifiée au-dessus de ladite surface d'échantillon.

9. Procédé selon l'une quelconque des revendications 4 à 6, dans lequel ledit support d'enregistrement a une couche d'enregistrement sur la surface.

10. Procédé selon l'une quelconque des revendications 5 à 7, dans lequel ledit enregistrement est effectué par application audit support d'enregistrement, en utilisant ladite première électrode-sonde (111), d'une tension impulsionnelle dépassant une tension de seuil pour modifier une résistance électrique dudit support d'enregistrement.

11. Procédé selon la revendication 6, dans lequel ladite reproduction est effectuée par détection d'un courant d'effet tunnel passant entre ladite première électrode-sonde (111) et ledit support d'enregistrement.

12. Dispositif selon la revendication 1, dans lequel le dispositif est un dispositif d'enregistrement/reproduction.

13. Dispositif selon la revendication 1, dans lequel le dispositif est un dispositif de reproduction.

14. Dispositif selon la revendication 1 ou 2, dans lequel le dispositif est un dispositif d'enregistrement/reproduction/effacement.

15. Dispositif selon la revendication 1, dans lequel le dispositif est un microscope à balayage à effet tunnel.
